# EUROPEAN PATENT APPLICATION

(11) **EP 4 195 721 A1**
(43) Date of publication of application: **14.06.2023**
(21) Application number: 21213770.7
(22) Date of filing: 10.12.2021
(51) Int. Cl.: H04W 4/90, H04W 76/50, H04W 72/04, H04W 88/06

(54) **MOBILE COMMUNICATION NETWORK, MOBILE TERMINAL AND METHOD FOR USING AN EMERGENCY SERVICE**

(71) Applicant: NTT DOCOMO, INC., Chiyoda-Ku Tokyo 100-6150 (JP)
(72) Inventor: SAMA, Malla Reddy, 80687 Munich (DE); MINOKUCHI, Atsushi, Tokyo 100-6150 (JP); AL-BAKRI, Ban, Tokyo 100-6150 (JP)
(74) Representative: Viering, Jentschura & Partner mbB Patent- und Rechtsanwälte

(57) **Abstract**

According to one embodiment, a mobile communication network is described comprising a radio access network configured to transmit, via control signalling to a mobile terminal, control information for using an emergency service via another mobile communication network for the case that, for the mobile terminal, no radio cell of the mobile communication network is available for using the emergency service.

## Description

The present disclosure relates to mobile communication networks, mobile terminals and methods for using an emergency service.

Mobile communication networks typically support emergency services, e.g., allow a user to make an emergency call. This may include pressing an emergency call button or inputting a special emergency number. An emergency call is a call that typically has high priority in case of network congestion and may for example include that a location of the user is automatically sent.

However, it may occur that a user wants to wish to perform an emergency call but the user's mobile terminal cannot find a suitable radio cell, e.g. because being out of coverage of its primary (e.g. home) mobile communication network or due to poor coverage. A possible approach may then be to fall back to another communication network, e.g. a non-public network, i.e. to switch to another communication network to perform the emergency call.

It is planned that for 5G (Fifth Generation) mobile communication, non-public networks may be deployed. A 5G non-public network (NPN) is a 5GS (5G communication system) deployed for non-public use (e.g. deployed by an enterprise for its members of the enterprise). An NPN may be deployed as standalone NPN (SNPN) which means that the NPN is not relying on network functions provided by a PLMN (Public Land Mobile Network) or as a Public Network Integrated NPN (PNI-NPN), which means that the NPN is deployed with the support of a PLMN

However, it cannot be guaranteed that another communciation network, with which the mobile terminal registers for an emergency call, like an SNPN, supports emergency calls (i.e. due to country regulations) and thus time may be wasted by trying to connect to multiple possible fallback networks until a suitable one is found. Another issue may be that an SNPN does support emergency calls, but uses a different emergency number than the user's home network. This may lead to the emergency call failing.

Accordingly, approaches are desirable which allow reliably performing emergency calls when out of coverage of a primary mobile communciation network.

According to one embodiment, a mobile communication network is provided comprising a radio access network configured to transmit, via control signalling to a mobile terminal, control information for using an emergency service via another mobile communication network for the case that, for the mobile terminal, no radio cell of the mobile communication network is available for using the emergency service(s).

According to a further embodiment, a mobile terminal is provided configured to register in a mobile communication network, receive control information from the mobile communication network about using an emergency service(s) via another mobile communication network for the case that, for the mobile terminal, no radio cell of the communication network is available for using the emergency service, check, in response to a user request to perform the emergency service, whether a radio cell of the mobile communication network is available for using the emergency service and if no radio cell of the mobile communication network is available for using the emergency service, perform the emergency service via the other mobile communication network in accordance with the control information.

According to a further embodiment, a method for performing an emergency service is provided comprising communicating, between a radio access network of a mobile communication network and a mobile terminal, via control signalling, control information for using the emergency service via another mobile communication network for the case that, if, for the mobile terminal, no radio cell of the mobile communication network is available for using the emergency service.

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:
- Figure 1: shows a radio communication system.
- Figure 2: shows a Stand-alone Non-Public Network.
- Figure 3: shows a communication arrangement.
- Figure 4: shows a mobile communication network according to an embodiment and a mobile terminal according to an embodiment.

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

Various examples corresponding to aspects of this disclosure are described below:
Example 1 is a mobile communication network comprising a radio access network configured to transmit, via control signalling to a mobile terminal, control information for using an emergency service via another mobile communication network for the case that, for the mobile terminal, no radio cell of the mobile communication network is available for using the emergency service.
Example 2 is the mobile communication network of Example 1, wherein the radio access network is configured to transmit the control information in a registration procedure for registering the mobile terminal in the mobile communication network.
Example 3 is the mobile communication network of Example 1, wherein the radio access network is configured to transmit the control information over the access stratum and/or over the non-access stratum.
Example 4 is the mobile communication network of any one of Examples 1 to 3, wherein the control information includes, for at least one mobile communication network including the other mobile communication network, an indication whether the at least one mobile communication network supports emergency service.
Example 5 is the mobile communication network of Example 4, wherein the indication indicates whether the at least one mobile communication network supports subscriber identity module-less emergency services.
Example 6 is the mobile communication network of any one of Examples 1 to 5, wherein the control information includes one or more conditions under which the mobile terminal should switch to the other mobile communication network for using the emergency service.
Example 7 is the mobile communication network of any one of Examples 6, wherein the one or more conditions include that for each of a predefined set of radio access technologies no radio cell of the mobile communication network is available for the mobile terminal for using the emergency service.
Example 8 is the mobile communication network of Example 6 or 7, wherein the one or more conditions include that for each of a predefined set of mobile communication networks including at least the mobile communication network, no radio cell is available for the mobile terminal for using the emergency service.
Example 9 is the mobile communication network of any one of Examples 1 to 8, wherein the control information includes, for at least one mobile communication network including the other mobile communication network, an indication of one or more emergency numbers used for emergency calls in the at least one mobile communication network.
Example 10 is the mobile communication network of any one of Examples 1 to 9, wherein the control information includes a fallback timer value specifying a time interval after which the mobile terminal may switch back to the mobile communication network when having switched to the other mobile communication network for checking whether it may use the emergency service using the other mobile communication network.
Example 11 is the mobile communication network of any one of Examples 1 to 10, wherein the mobile communication network is a public land mobile network and the other mobile communication network is a private network or wherein the mobile communication network is a private network and the other mobile communication network is a public land mobile network or wherein both the mobile communication network and the other mobile communication network are public land mobile networks.
Example 12 is the mobile communication network of any one of Examples 1 to 10, wherein the mobile communication network is private network and the other mobile communication network is a public land mobile network and wherein the control information indicates that after the mobile terminal has switched to the public land mobile network for checking whether it may use the emergency service using the public land mobile network it should, if it cannot use the emergency service using the public land mobile network search for a further public land mobile network for using the emergency service instead of switching back to the private network.
Example 13 is the mobile communication network of Example 11 or 12, wherein the private network is a standalone private network.
Example 14 is a mobile terminal configured to register in a mobile communication network, receive control information from the mobile communication network about using an emergency service via another mobile communication network for the case that, for the mobile terminal, no radio cell of the communication network is available for using the emergency service, check, in response to a user request to perform an emergency call, whether a radio cell of the mobile communication network is available for using the emergency service and, if no radio cell of the mobile communication network is available for using the emergency service, perform an emergency call via the other mobile communication network in accordance with the control information.
Example 15 is a method for using an emergency service comprising communicating, between a radio access network of a mobile communication network and a mobile terminal, via control signalling, control information for using the emergency service via another mobile communication network for the case that, if, for the mobile terminal, no radio cell of the mobile communication network is available for using the emergency service.

For example, the at least one mobile communication network is a set of public land mobile networks and the other mobile communication network is a (e.g. standalone) private network.

It should be noted that one or more of the features of any of the examples above may be combined with any one of the other examples. In particular, the Examples described in context of the mobile communication network are analogously valid for the mobile terminal and vice versa, where applicable.

Further, according to various embodiments, a communication system is provided including the mobile communication network and the mobile terminal (in each one case according to any one of the above examples). In particular, this includes the mobile terminal being configured to act in accordance with the control information (e.g. the conditions). Additionally, a communication system arrangement may be provided which includes this communication system and the one or more other communication networks.

According to further embodiments, a computer program and a computer readable medium comprising instructions, which, when executed by a computer, make the computer perform the method for using an emergency service are provided.

In the following, various examples will be described in more detail.

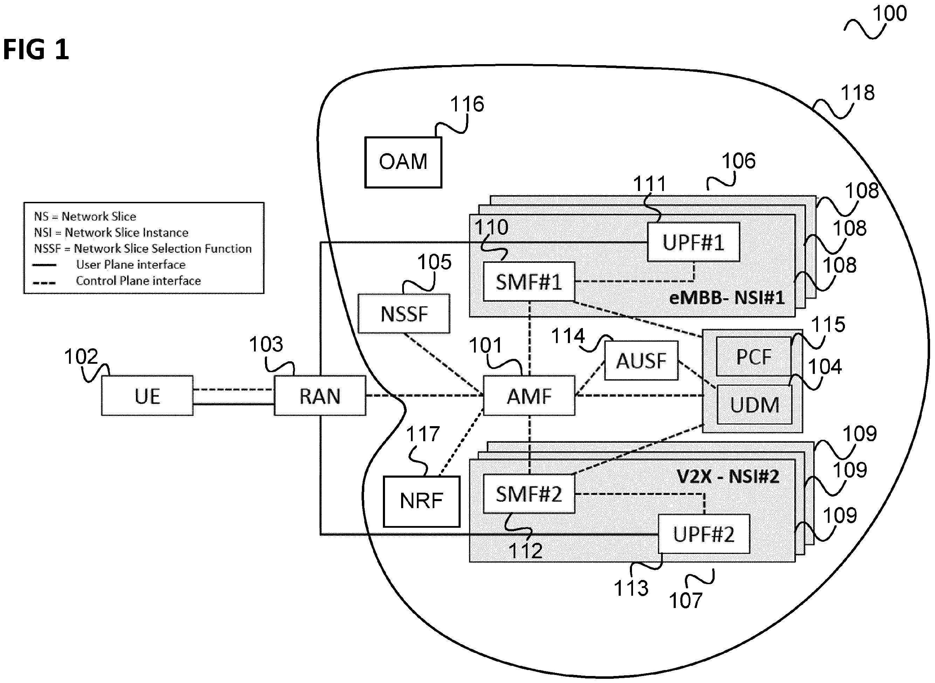

Figure 1 shows a radio communication system 100.

The radio communication system 100 includes a mobile radio terminal device 102 such as a UE (user equipment), a nano equipment (NE), and the like. The mobile radio terminal device 102, also referred to as subscriber terminal, forms the terminal side while the other components of the radio communication system 100 described in the following are part of the mobile radio communication network side, i.e. part of a mobile radio communication network (e.g. a Public Land Mobile Network PLMN).

Furthermore, the radio communication system 100 includes a radio access network 103, which may include a plurality of radio access network nodes, i.e. base stations configured to provide radio access in accordance with a 5G (Fifth Generation) radio access technology (5G New Radio). It should be noted that the radio communication system 100 may also be configured in accordance with LTE (Long Term Evolution) or another radio communication standard such as WiFi, but 5G is herein used as an example. Each radio access network node may provide a radio communication with the mobile radio terminal device 102 over an air interface. It should be noted that the radio access network 103 may include any number of radio access network nodes.

The radio communication system 100 further includes a core network 118 including an Access and Mobility Management Function (AMF) 101 connected to the RAN 103, a Unified Data Management (UDM) 104 and a Network Slice Selection Function (NSSF) 105. Here and in the following examples, the UDM may further consist of the actual UE's subscription database, which is known as, for example, the UDR (Unified Data Repository). The core network 118 further includes an AUSF (Authentication Server Function) 114 and a PCF (Policy Control Function) 115.

The core network 118 may have multiple network slices 106, 107 and for each network slice 106, 107, the operator may create multiple network slice instances (NSIs) 108, 109. For example, the core network 118 includes a first core network slice 106 with three core network slice instances (CNIs) 108 for providing Enhanced Mobile Broadband (eMBB) and a second core network slice 107 with three core network slice instances (CNIs) 109 for providing Vehicle-to-Everything (V2X).

Typically, when a network slice is deployed, network functions (NFs) are instantiated, or (if already instantiated) referenced to form a network slice instance (NSI) and network functions that belong to a network slice instance are configured with a network slice instance identification.

Specifically, in the shown example, each instance 108 of the first core network slice 106 includes a first Session Management Function (SMF) 110 and a first User Plane Function (UPF) 111 and each instance 109 of the second core network slice 107 includes a second Session Management Function (SMF) 112 and a second User Plane Function (UPF) 113.

The core network 118 may further include an NRF (Network Repository Function) 117, which provides network function/network function service registration, network function/network function service discovery. The NRF may have an interface to any network function in the mobile radio communication network side, e.g. have an interface to the AMF 101, the SMFs 110, 112. For simplicity, only the interface between the NRF 117 and the AMF 101 is depicted.

The radio communication system 100 may further include an OAM (Operation, Administration and Maintenance) function (or entity) 116, e.g. implemented by one or more OAM servers which is connected to the RAN 103 and the core network 118 (connections are not shown for simplicity).

According to 3GPP (Third Generation Partnership Project), it is discussed to provide 5G non-public networks.

In contrast to a network that offers mobile network services to the general public, a 5G non-public network (NPN, also sometimes called a private network) provides 5G network services to a clearly defined user organisation or group of organisations. The 5G non-public network is deployed on the organisation's defined premises, such as a campus or a factory. Non-public networks can for example be desirable because of:
- High quality-of-service requirements;
- High security requirements, met by dedicated security credentials;
- Isolation from other networks, as a form of protection against malfunctions in the public mobile network. Also, isolation may be desirable for reasons of performance, security, privacy, and safety;
- Accountability. A non-public network makes it easier to identify responsibility for availability, maintenance, and operation.

A 5G NPN may be deployed as a Standalone Non-Public Network (SNPN) or as a Public Network Integrated NPN (PNI-NPN).

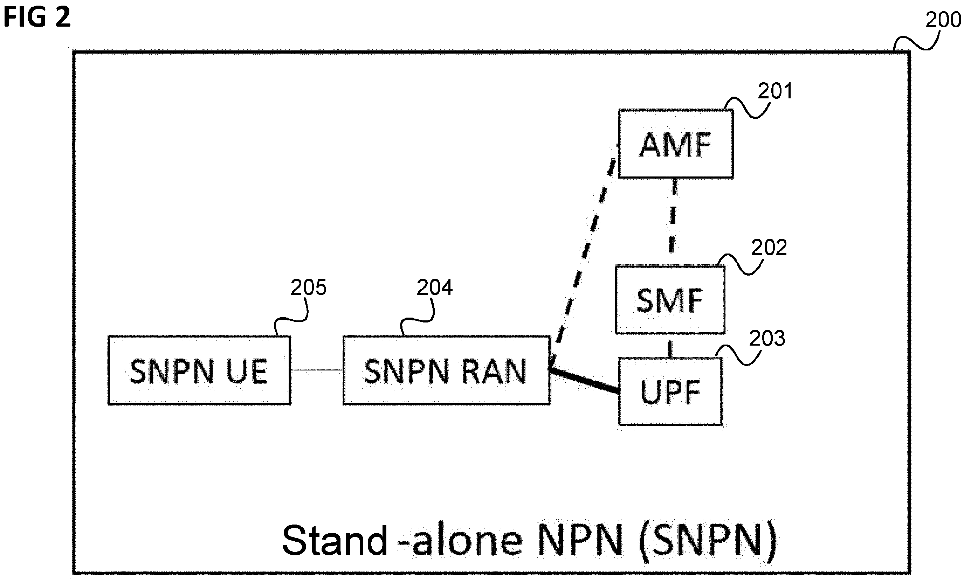

Figure 2 shows a Stand-alone NPN (SNPN) 200.

In a standalone non-public network (isolated deployment), the NPN is deployed as an independent, standalone network. All network functions, in this example an AMF 201, an SMF 202 and a UPF 203 as well as the SNPN RAN 204 are located inside the logical perimeter of the defined premises (e.g. factory) and the NPN 200 is separate from the public network. The only communication path may take place between the NPN and the public network is e.g., via a firewall or via Internet. The firewall is a clearly defined and identifiable demarcation point. The operator of the NPN has sole and exclusive responsibility for operating the NPN and for all service attributes up to this point.

The public operator does not have any role in the SNPN e.g., an enterprise can have its deployment with dedicated spectrum without relay public operators.

An SNPN UE 205, i.e. a UE 102 which has access rights to the SNPN 200 may use the SNPN 200, i.e. register with the SNPN 200 and establish communication sessions via the SNPN 200.

An SNPN-enabled UE 205 may support an SNPN access mode (which is different from PLMN selection mode). The SNPN RAN 204 broadcasts a "PLMN ID" and a "NID". PLMN IDs can be based on mobile country code (MCC) 999 as assigned by ITU (International Telecommunication Union).

An SNPN is based on 3GPP-defined technologies and is entirely independent with its own dedicated SNPN ID. An optional connection to public network services via a firewall can be employed to enable access to public network services, such as voice, while within NPN coverage. Alternatively, NPN devices (UEs) can subscribe directly to the public network to access its services (dual subscription). If desired, the optional connection can be leveraged to access NPN services via the public network. Furthermore, the NPN operator can conclude roaming agreements with one or more public network operators, and the optional connection also be used for this purpose. Roaming agreements with public networks may entail technical constraints, depend on the specific use case.

In the following, it is assumed that a UE 102 is also SNPN-enabled, i.e. can also act as a SNPN UE 305.

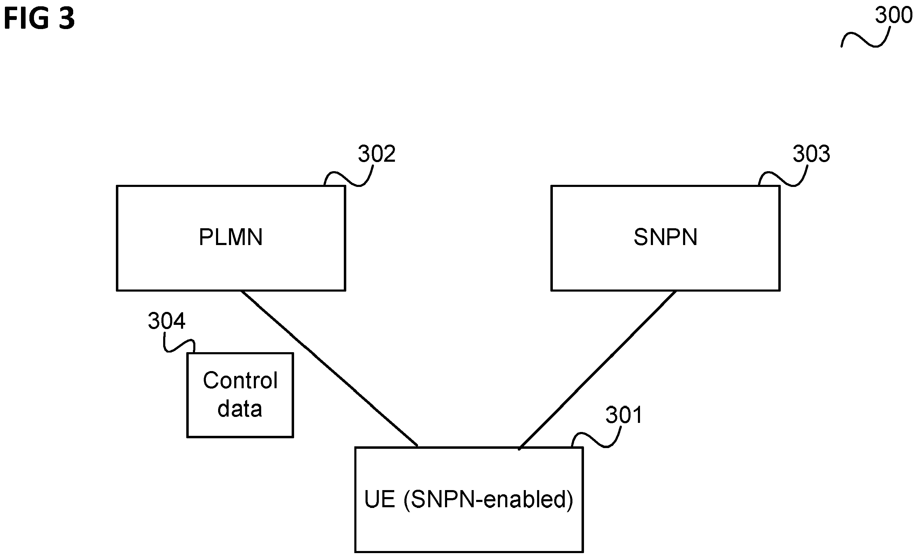

Figure 3 shows a communication arrangement 300.

A UE 301 can connect to a PLMN 302 as described with reference to figure 1 and is also assumed that the UE is SNPN-enabled (i.e. SNPN capable), i.e. can also connect to an SNPN as described with reference to figure 2. This means in particular that the UE 301 can camp on a radio cell of the PLMN 302 as well as on a radio cell of the SNPN.

An SNPN-enabled UE 301 supports the SNPN access mode. When the UE 301 is set to operate in SNPN access mode the UE only selects and registers with SNPNs over the air interface (Uu) (as long as it is in SNPN access mode).

3GPP Release 17 has introduced a feature that an SNPN can support camping on a limited service state cell for an emergency service.

The RAN 103 of the PLMN 302 may broadcast an "Emergency Services Support Indication" to indicate whether the PLMN 302 supports an emergency service, e.g. supports that the UE 301 makes an emergency call. Similarly, the RAN 204 of the SNPN 303 may broadcast an "Emergency Services Support Indication" to indicate whether the SNPN 303 supports an emergency service. The UE 301 may check for such an indication to check for emergency support of the PLMN 302 and the SNPN 303. The network PLMN 302 and the SNPN 303 (e.g. an AMF 101, 201) can also indicate the emergency service support during the registration procedure (i.e., in the accept message of the registration procedure) to the UE 301. The indication is for example valid for the current Registration Area and indicating per RAT (radio access technology).

So, for example, assuming that both the PLMN 302 and the SNPN 303 support an emergency service, a UE 301 may look for a cell in the PLMN for using an emergency service (e.g. what is referred to as an "acceptable cell" in 3GPP) and, if it cannot find a cell (e.g. is not in the coverage area of the PLMN), it may activate SNPN access mode and attempt to camp on an acceptable cell of any available SNPN (e.g. SNPN 303) supporting emergency calls (and vice versa move from SNPN to PLMN cell if it cannot find an acceptable SNPN cell for the emergency service).

However, emergency services is a regulated service, and possibly not all countries allow the UE to perform emergency services over an SNPN. So, the UE 301 may, after having switched to SNPN access mode, determine that the SNPN 303 does not support using an emergency service. Moreover, the emergency numbers used in SNPN and PLMN may not be the same. Another issue is that moving the UE 301 between SNPN 303 and PLMN 302 may cause ping-pong in an emergency situation.

Therefore, according to various embodiments, the UE 301 is informed about whether an SNPN 302 located in a certain area or country supports an emergency service and about conditions for a UE to move between PLMN 302 and SNPN 303, in particular if the UE 301 first moves to the SNPN 303 and then does not find an acceptable SNPN cell.

According to various embodiments, this control information is transmitted by the PLMN 302 in the form of emergency service usage control data 304 to the UE 301.

The emergency service usage control data 304 includes control information for using an emergency service via another mobile communication network (e.g. SNPN 303) for the case that, for the mobile terminal, no radio cell of a (primary, e.g. home) mobile communication network (here PLMN 302) is available for using the emergency service. It should be noted that in contrast to the "Emergency Services Support Indication" the emergency service usage control data 304 thus relates to using the emergency service via another mobile communication network rather than the mobile communication network itself.

Since the operator of the PLMN 302 may choose the emergency service usage control data an operator-controlled emergency service is thus provided according to various embodiments.

The emergency service usage control data 304 may be transmitted in the form of a (newly introduced) information element (IE) between the PLMN 302 network and the UE 301 over the access stratum (AS) and/or over the non-access atratum (NAS).

The emergency service usage control data 304 may in particular include an indication of conditions to perform an emergency service e.g., over SNPN, if a UE cannot find an acceptable PLMN cell or vice versa (i.e., an indication of conditions to perform an emergency service e.g., over PLMN, if a UE cannot find an acceptable SNPN cell). The PLMN 302 may for example provide the emergency service usage control data 304 (in particular the indication of the emergency call conditions, i.e. the emergency call condition information) during the registration procedure of the UE 301 in the PLMN 302 or configured in the USIM (Universal Subscriber Identity Module). The PLMN 302 may also include the emergency service usage control data 304 in RRC (Radio Resource Control) signalling to the UE 301. How the PLMN 302 transmits the emergency service usage control data 304 may depend on a regulation and/or an operator policy

According to the emergency service usage control data 304, in particular the emergency call condition information, the UE 301 can for example decide to move to SNPN access mode for using the emergency service via the SNPN 303.

The emergency service usage control data 304 for example includes one or more of the following:
- Conditions for changing to SNPN access mode, e.g.
   ∘ Change to SNPN if the UE cannot find an acceptable PLMN cell (in all PLMNs (e.g. all PLMNs operating according to 3GPP), known to the mobile terminal) to perform the emergency service; or
   ∘ After checking all access types of the PLMN 302 and determining that it cannot use any available access type for the emergency service
- SNPN ID(s) that support emergency service in an area and/or country, e.g. SNPN USIM (Universal Subscriber Identity Module) support i.e., USIMless Emergency service supported by SNPN or not. For example, the SNPN ID(s) is/are provided/determined based on the service level agreement between PLMN and SNPNs in an area and/or country.
- Emergency numbers used by the SNPN(s) (if they supported the emergency service). Using this information, the mobile terminal may for example automatically translate an emergency call number entered by the user to a corresponding emergency call number used by an SNPN that is used by the mobile terminal for a fallback for an emergency call.
- Fallback conditions, e.g. a fallback timer threshold: the UE 301 starts a timer after having moved to SNPN 303 access mode. If the UE 303 cannot find an acceptbale SNPN cell before the timer has expired (i.e. exceeded the indicated fallback timer threshold), the UE 303 moves back to the PLMN 302 (e.g. the UE's home PLMN or visited PLMN in case of roaming).
- Ping-pong condition, e.g. indicating that if the UE 301 has already moved back from SNPN access mode (e.g. because it could not find an acceptable SNPN cell in an area), the UE 303 should not go back again to SNPN access mode but try to find an acceptable PLMN cell or waiting until the timer the expriers before again switching to SNPN access mode.

In the above scenario, the emergency service usage control data 304 is provided by the PLMN for conditions to move to SNPN communication network. But, in other scenarios such as if a UE cannot find an acceptable SNPN cell, the UE can use an emergency service via PLMN based on the control data 304 provided by the SNPN. In this scenario, the SNPN is considered as home mobile communication network of the UE.

In case of roaming, the home PLMN provides the emergency service usage control data 304 for a visited location. In the control data 304, the home PLMN can provide conditions to move to other mobile communication network such as SNPNs and/or visited PLMNs information in the visited location.

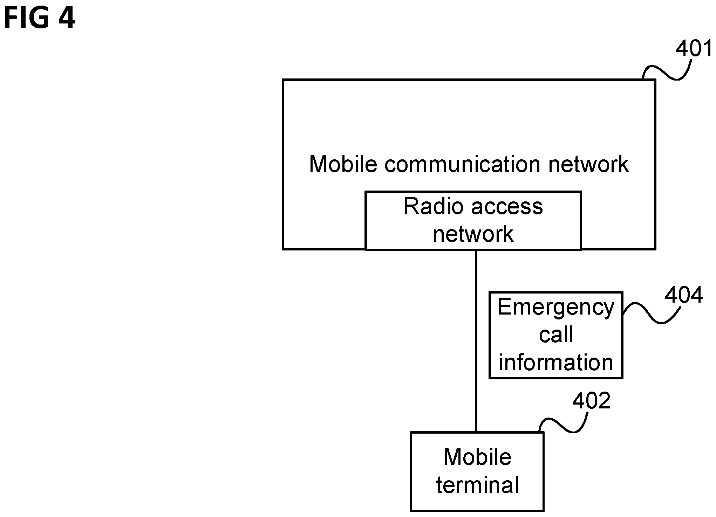

In summary, according to various embodiments, a mobile communication network and a mobile terminal are provided as illustrated in figure 4.

Figure 4 shows a mobile communication network 401 according to an embodiment and a mobile terminal 402 according to an embodiment.

The mobile communication network 401 comprises a radio access network 403 configured to transmit, via control signalling to the mobile terminal 402, control information 404 about using an emergency service via another mobile communication network for the case that, for the mobile terminal 402, no radio cell of the mobile communication network is available for using the emergency service.

The mobile terminal 402 is configured to register in the mobile communication network 401, receive the control information 404 from the mobile communication network 404 about using the emergency service via another mobile communication network for the case that, for the mobile terminal, no radio cell of the communication network is available for using the emergency service, check, in response to a user request to perform an emergency call, whether a radio cell of the mobile communication network 401 is available for using the emergency service and if no radio cell of the mobile communication network is available for using the emergency service, perform an emergency call via the other mobile communication network in accordance with the control information.

According to various embodiments, in other words, a mobile communication network provides control information (e.g. a policy) to be considered by the mobile terminal for using an emergency service via another mobile communication network in case that the mobile terminal cannot use the emergency service via the mobile communication network itself. This may in particular include conditions for a fallback to the other mobile communication network for the emergency service (e.g. from a PLMN to an SNPN or vice versa). The control information may be (or may be seen as) control information for using the emergency service via another mobile communication network. In particular, it may include information about the support of emergency calls by the other mobile communication network and the relevant conditions.

Thus, according to various embodiments a method is carried out comprising communicating, between a radio access network of a mobile communication network and a mobile terminal, via control signalling, control information for using an emergency service via another mobile communication network for the case that, if, for the mobile terminal, no radio cell of the mobile communication network is available for using the emergency service.

Using an emergency service can for example mean making an emergency call. It may also refer to other emergency-related functions like performing a location update.

A radio cell of the mobile communication network (or the other mobile communication network) for using an emergency service being available (or not) may mean an acceptable radio cell of the mobile communication network (or the other mobile communication network) for using an emergency service being available (or not).

"Communicating" may refer to receiving or sending, depending on whether the operation of the mobile communication network or the operation of the mobile terminal is considered. Depending on whether the operation of the mobile communication network or the operation of the mobile terminal is considered in the method, the method may comprise further operations performed by the mobile communication network and the mobile terminal, respectively.

According to various embodiments, an operator controlled emergency service handling for a mobile terminal is provided which applies to when a mobile terminal cannot find a radio cell of mobile communication network (e.g. to register in or camp on) for the ermgency service. The mobile comunication network (e.g. a PLMN) may for example provide conditions to the mobile terminal to move to a private network for an emergency service (e.g. to make an emergency call) or another PLMN and then return (i.e. return) to the mobile comunication network. The approaches described above can also be applied to the case that a mobile terminal cannot find a suitable network (e.g. SNPN) cell for an emergency call: then, the mobile terminal can for example move to an PLMN for an emergency call. For example, a PLMN may offer emergency calls as a service to SNPNs. This means that an operator of an SNPN may have an agreement with a PLMN operator such that SNPN mobile terminals (for which the SNPN is the home network) may use the PLMN for emergency calls. For the opposite case (i.e. fallback from PLMN to SNPN), a PLMN operator may for example move a mobile terminal to a SNPN when the PLMN's coverage area in a particular location is poor, for example in the garage of a stadium.

Thus, an improved emergency service handling based on operator control can be achieved. In particular, the mobile communication network may control the mobile terminal in the context of an emergency call to achieve a simplified mobile terminal behavior. For example, if the mobile terminal cannot find a radio cell of the mobile communication network, the mobile terminal proceeds according to an operator policy provided by the mobile communication network. For example, the mobile terminal does not switch to SNPN access mode if the operator does not want the mobile terminal to move to an SNPN (e.g., for security reasons).

The control information can be communicated via one or more newly introduced information elements (e.g. "emergency service conditions") and may be communicated via AS (access stratum) signalling and/or NAS (non-access stratum) signalling.

The mobile terminal comprises for example a network selection logic and logic for respecting (i.e. operating according to) the (fallback) conditions

For example, according to an embodiment, a communication system is provided comprising a mobile terminal and a first communication network configured to send emergency service condition information to the mobile terminal. Based on the emergency service condition information, the mobile terminal determines to move to a second communication network if the communication terminal cannot find a radio cell for using an emergency service of the first communication network. After moving to the second communication network, if the communication terminal cannot find a suitable cell for an emergency service, the mobile terminal, based on the emergency service condition information, moves back to the first communication network. As in the examples described the first communication network is for example a PLMN, and the second communication network is an SNPN or vice versa.

The components and operations described above of the mobile communication network and the mobile terminal described above may for example be implemented by one or more circuits. A "circuit" may be understood as any kind of a logic implementing entity, which may be special purpose circuitry or a processor executing software stored in a memory, firmware, or any combination thereof. Thus a "circuit" may be a hard-wired logic circuit or a programmable logic circuit such as a programmable processor, e.g. a microprocessor. A "circuit" may also be a processor executing software, e.g. any kind of computer program. Any other kind of implementation of the respective functions described above may also be understood as a "circuit".

While specific aspects have been described, it should be understood by those skilled in the art that various changes in form and detail may be made therein without departing from the spirit and scope of the aspects of this disclosure as defined by the appended claims. The scope is thus indicated by the appended claims and all changes which come within the meaning and range of equivalency of the claims are therefore intended to be embraced.

## Claims

1. A mobile communication network comprising:
a radio access network configured to transmit, via control signalling to a mobile terminal, control information for using an emergency service via another mobile communication network for the case that, for the mobile terminal, no radio cell of the mobile communication network is available for using the emergency service.

2. The mobile communication network of claim 1, wherein the radio access network is configured to transmit the control information in a registration procedure for registering the mobile terminal in the mobile communication network.

3. The mobile communication network of claim 1, wherein the radio access network is configured to transmit the control information over the access stratum and/or over the non-access stratum.

4. The mobile communication network of any one of claims 1 to 3, wherein the control information includes, for at least one mobile communication network including the other mobile communication network, an indication whether the at least one mobile communication network supports emergency service.

5. The mobile communication network of claim 4, wherein the indication indicates whether the at least one mobile communication network supports subscriber identity module-less emergency services.

6. The mobile communication network of any one of claims 1 to 5, wherein the control information includes one or more conditions under which the mobile terminal should switch to the other mobile communication network for using the emergency service.

7. The mobile communication network of any one of claims 6, wherein the one or more conditions include that for each of a predefined set of radio access technologies no radio cell of the mobile communication network is available for the mobile terminal for using the emergency service.

8. The mobile communication network of claim 6 or 7, wherein the one or more conditions include that for each of a predefined set of mobile communication networks including at least the mobile communication network, no radio cell is available for the mobile terminal for using the emergency service.

9. The mobile communication network of any one of claims 1 to 8, wherein the control information includes, for at least one mobile communication network including the other mobile communication network, an indication of one or more emergency numbers used for emergency calls in the at least one mobile communication network.

10. The mobile communication network of any one of claims 1 to 9, wherein the control information includes a fallback timer value specifying a time interval after which the mobile terminal may switch back to the mobile communication network when having switched to the other mobile communication network for checking whether it may use the emergency service using the other mobile communication network.

11. The mobile communication network of any one of claims 1 to 10, wherein the mobile communication network is a public land mobile network and the other mobile communication network is a private network or wherein the mobile communication network is a private network and the other mobile communication network is a public land mobile network or wherein both the mobile communication network and the other mobile communication network are public land mobile networks.

12. The mobile communication network of any one of claims 1 to 10, wherein the mobile communication network is private network and the other mobile communication network is a public land mobile network and wherein the control information indicates that after the mobile terminal has switched to the public land mobile network for checking whether it may use the emergency service using the public land mobile network it should, if it cannot use the emergency service using the public land mobile network search for a further public land mobile network for using the emergency service instead of switching back to the private network.

13. The mobile communication network of claim 11 or 12, wherein the private network is a standalone private network.

14. A mobile terminal configured to
register in a mobile communication network;
receive control information from the mobile communication network about using an emergency service via another mobile communication network for the case that, for the mobile terminal, no radio cell of the communication network is available for using the emergency service;
check, in response to a user request to perform an emergency call, whether a radio cell of the mobile communication network is available for using the emergency service; and
if no radio cell of the mobile communication network is available for using the emergency service, perform an emergency call via the other mobile communication network in accordance with the control information.

15. A method for using an emergency service comprising:
Communicating, between a radio access network of a mobile communication network and a mobile terminal, via control signalling, control information for using the emergency service via another mobile communication network for the case that, if, for the mobile terminal, no radio cell of the mobile communication network is available for using the emergency service.
